# EUROPÄISCHE PATENTSCHRIFT

(11) **EP 1 418 261 B1**
(45) Veröffentlichungstag und Bekanntmachung des Hinweises auf die Patenterteilung: **14.05.2008**
(21) Anmeldenummer: 03022418.2
(22) Anmeldetag: 07.10.2003
(51) Int. Cl.: D03D 15/02, B01D 39/12

(54) **Drahtgewebe**
Woven wire fabric
Tissu de fils métalliques

(30) Priorität: 09.11.2002 DE 20217296 U
(43) Veröffentlichungstag der Anmeldung: 12.05.2004
(73) Patentinhaber: Haver & Boecker, 59302 Oelde (DE)
(72) Erfinder: John, Detlef, 59229 Ahlen (DE); Butenkemper, Stefan, 59320 Ennigerloh (DE)
(74) Vertreter: Dantz, Jan Henning

(56) Entgegenhaltungen:
- EP-A- 0 133 624
- DE-B- 1 111 151

## Beschreibung

Die Erfindung betrifft ein Drahtgewebe, insbesondere ein Filtergewebe, welches aus in einer Bindungsart festgelegten metallischen Kett- und metallischen Schussdrähten besteht. Ein solches Drahtgewebe ist aus EP-A-0 133 624 bekannt.

Das in Rede stehende Drahtgewebe könnte auch als Filterfeingewebe bezeichnet werden, da die Durchmesser der Kettdrähte und der Schussdrähte maximal im Bereich von 0,1 bis 0,2 mm liegen. Die minimalen Durchmesser der Kett- und der Schussdrähte liegen zwischen 0,02 und 0,03 mm. Die Anzahl der Kettdrähte liegt im Bereich zwischen 71 bis 197 Kettdrähten pro cm (180 bis 500 Kettdrähten pro inch). Die Anzahl der Schussdrähte liegt zwischen 197 bis 1970 Drähten pro cm (500 bis 5000 Drähten pro inch). Durch den Webprozess entstehen die sogenannten Filtrationsdreiecke. Bislang ist der Abstand der Schussdrähte kleiner als die Filtrationsdreiecke. Die Verwendung von Kett- und Schussdrähten mit den extrem geringen Durchmessern ist notwendig, um Filterfeinheiten zu erreichen, die unter 10µm. liegen. Die Filterfeinheiten können durch die Durchmesser der Kett- und Schussdrähte sowie durch die Anzahl der Drähte pro Längeneinheit variiert werden. Bei den bislang bekannten Drahtgeweben sind die lichten Abstände zwischen den einzelnen Kettdrähten größer als die Durchmesser der verwobenen Schussdrähte.

Als Webarten kommen bevorzugt sogenannte Köperfiltertressen (DTW, BMT), aber auch glatte Tressen (SPW, RPD) in Frage.

Die in Frage kommenden Drahtgewebe haben sich für die vielfältigsten und unterschiedlichsten Einsatzfälle bestens bewährt. Die Anzahl der notwendigen Schussdrähte pro Längeneinheit ist jedoch relativ hoch. Daraus resultieren die entsprechenden Herstellkosten und auch ein entsprechend hoher Materialbedarf. Darüber hinaus ist die Länge des in einer Zeiteinheit hergestellten Gewebes auch entsprechend gering.

Der Erfindung liegt die Aufgabe zugrunde, ein Drahtgewebe der eingangs näher beschriebenen Art so auszulegen, dass bei Beibehaltung der Filterfeinheit der Materialbedarf verringert werden kann, wobei die Leistung eines Webstuhles in einer Zeiteinheit erhöht wird, d. h. die Länge eines in der Zeiteinheit gewebten Drahtgewebes soll vergrößert werden.

Die gestellte Aufgabe wird gelöst, indem die Durchmesser der Schussdrähte gleich oder größer sind als die lichten Abstände von jeweils zwei nebeneinander angeordneten Kettdrähten, und dass die Schussdrähte in den Kreuzungsbereichen mit den Kettdrähten eingeschnürt sind.

Die Durchmesser der Schussdrähte sollten zumindest so groß sein, wie die lichten Abstände von jeweils zwei nebeneinander angeordneten Kettdrähten. Vorzugsweise sollten sie jedoch auch noch größer sein, wie noch erläutert wird. Unter den lichten Abständen sind die freien Räume zu verstehen, nicht die Abstände der Mittellängsachsen von zwei nebeneinander angeordneten Kettdrähten. In verblüffender Weise hat sich herausgestellt, dass es mit der heutigen Webtechnik möglich ist, dass die Schussfäden durch die Zwischenräume geführt werden, obwohl diese zunächst als zu eng erscheinen. Da die Schussdrähte in den Zwischenräumen eingeschnürt werden, wird eine Filterfeinheit wie bei den bislang bekannten Geweben erreicht, obwohl die Anzahl der Schussdrähte pro Längeneinheit verringert wird. Dadurch wird Material eingespart. Es wird außerdem eine höhere Leistung des Webstuhles erreicht. Die Einschnürung erfolgt durch Kaltverformung des jeweiligen Kreuzungsbereiches. Trotz des größer gewordenen Abstandes zwischen den einzelnen Schussdrähten bleibt die Filterfeinheit erhalten. Auch bei der erfindungsgemäßen Ausführung liegt diese unter 10 µm.

Gemäß einer bevorzugten Ausführungsform ist vorgesehen, dass die Schussdrähte in den Kreuzungsbereichen bis auf die Abstandsmaße der nebeneinander verlaufenden Kettdrähte oder annähernd bis auf die Abstandsmaße der nebeneinander angeordneten Kettdrähte eingeschnürt sind. Dadurch wird eine allzu starke Schwächung der Schussdrähte vermieden. Das Drahtgewebe wird besonders für die Partikeltrennung eines Gasfeststoffgemisches angewandt. Die auszufilternden Partikel sind äußerst klein. Es ist deshalb vorgesehen, dass sich die Durchmesser der Kettund der Schussfäden vom 1/100 mm-Bereich bis in den 1/10 mm-Bereich hinein erstrecken. Die Einschnürung der Schussdrähte liegt vorteilhafterweise im Bereich von 10 % des ursprünglichen Durchmessers jedes Schussdrahtes. Das erfindungsgemäße Drahtgewebe oder ein daraus hergestelltes Produkt wird bei bestimmten Einsätzen auch mit Druck beaufschlagt. Obwohl durch die Einschnürungen die Kett- und Schussdrähte gegeneinander fixiert sind, ist es für solche Anwendungsfälle zweckmäßig, wenn die Kreuzungspunkte der Kett- und Schussdrähte zusätzlich noch miteinander verbunden sind. Dies könnte in vorteilhafter Weise durch einen thermischen Vorgang, beispielsweise durch Sintern erfolgen. Das Drahtgewebe ist in bevorzugter Ausführung ein Tressengewebe. Die Durchmesser der Kettdrähte sind deshalb vorteilhafterweise größer als die Durchmesser der Schussdrähte. In einer bevorzugten Ausführungsform ist deshalb vorgesehen, dass die Durchmesser der Kettdrähte zwischen 0,03 mm bis 0,125 mm und die Durchmesser der Schussdrähte zwischen 0,02 mm bis 0,1 mm liegen. Die Dichte der Kettdrähte liegt zwischen 71 bis 197 Drähten (180 bis 500 Drähten) und die Dichte der Schussdrähte zwischen 197 bis 1970 Drähten (500 bis 5000 Drähten) jeweils pro cm (inch).

Anhand der beiliegenden Zeichnungen wird die Erfindung noch näher erläutert. Es zeigen:
- Fig. 1: ein Tressengewebe in einer Teilperspektive;
- Fig. 2: eine Stirnansicht des Tressengewebes nach der Fig. 1 in Richtung des Pfeiles II gesehen, und
- Fig. 3: eine der Fig. 2 entsprechende Darstellung, jedoch in einer anderen Bindungsart.

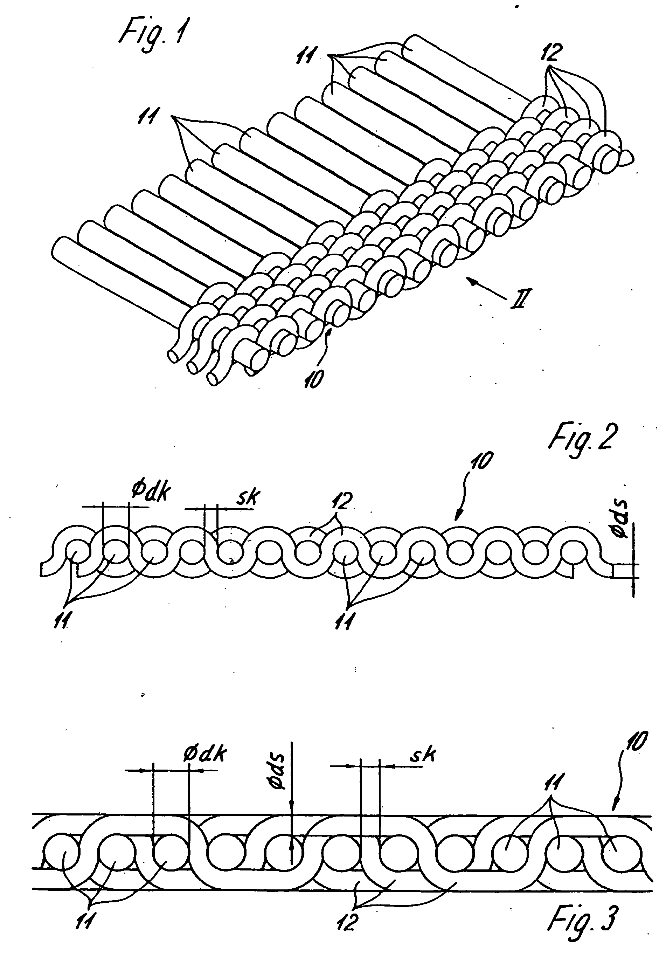

Der in der Fig. 1 dargestellte Drahtgewebeabschnitt 10 besteht aus den in Längsrichtung verlaufenden Kettdrähten 11 und in quer dazu verlaufenden, eingewobenen Schussdrähten 12. Aus Gründen der vereinfachten Darstellung sind die Schussdrähte 12 nicht über die gesamte Länge der gezeichneten Kettdrähte 11 gezeichnet. Die in den Figuren 1 und 2 dargestellte Bindung ist eine sogenannte SPW-Bindung. Die Schussdrähte 12 wechseln nach jedem Kettdraht 11 die Seite, jedoch ist der Seitenwechsel und zwei nebeneinander verlaufende Schussdrähte 12 um jeweils einen Kettdraht versetzt. In der Fig. 2 ist angedeutet, dass der Durchmesser DK der Kettdrähte 11 deutlich größer ist als der Durchmesser DS der Schussdrähte 12. Die lichten Abstände zwischen den Kettdrähten 11 sind geringer als die Durchmesser der Schussdrähte 12. Demzufolge kommt es in den Kreuzungspunkten zu einer Einschnürung, so dass der eingeschnürte Bereich auf das Maß SK reduziert wird.

Die Fig. 3 zeigt zwar auch ein Tressengewebe, jedoch in einer DTW-Bindung. Wie die Figur zeigt, sind die Durchmesser der Kettdrähte 11 größer als die der Schussdrähte 12. Der Seitenwechsel der Schussdrähte 12 erfolgt nach zwei Kettdrähten 11, wobei drei nebeneinander verlaufende Schussdrähte 12 jeweils um einen Draht 11 gegeneinander versetzt sind. Auch bei dieser Ausführung sind die lichten Abstände zwischen den Kettdrähten 11 ein klein wenig geringer als die Durchmesser der Schussdrähte 12, so dass es wiederum in den Kreuzungspunkten zu Einschnürungen kommt, wie durch das Maß SK dargestellt ist.

In nicht näher dargestellter Weise könnten die Kettdrähte 11 und die Schussdrähte 12 in den Kreuzungsbereichen noch durch eine thermische Behandlung fest miteinander verbunden sein. Diese thermische Behandlung wäre beispielsweise ein Sinterverfahren. Es sei noch erwähnt, dass die Drahtgewebeabschnitte in stark vergrößerter Darstellung gezeigt sind. Des weiteren sei erwähnt, dass die Erfindung nicht auf die dargestellten Ausführungsbeispiele bzw. Bindungsarten beschränkt ist.

Wesentlich ist, dass unabhängig von der Bindungsart die Durchmesser der Schussdrähte 12 gleich oder größer sind als die Lichtabstände von jeweils zwei nebeneinander angeordneten Kettdrähten 11 oder umgekehrt, dass der lichte Abstand von jeweils zwei nebeneinander angeordneten Kettdrähten 11 gleich oder geringer ist wie der Durchmesser der Schussdrähte 12.

## Patentansprüche

1. Drahtgewebe, insbesondere Filtergewebe, welches aus in einer Bindungsart festgelegten, metallischen Kett- und metallischen Schussdrähten (11, 12) besteht, **dadurch gekennzeichnet, dass** die Durchmesser der Schussdrähte (12) gleich oder größer sind als die lichten Abstände von jeweils zwei nebeneinander angeordneten Kettdrähten, und dass die Schussdrähte (12) in den Kreuzungsbereichen mit den Kettdrähten (11) eingeschnürt sind,

2. Drahtgewebe nach Anspruch 1, **dadurch gekennzeichnet, dass** die Schussdrähte (12) in den Kreuzungsbereichen bis auf das lichte Abstandsmaß der Kettdrähte (11) oder annähernd bis auf die lichten Abstandsmaße der Kettdrähte (11) eingeschnürt sind.

3. Drahtgewebe nach Anspruch 1 oder 2, **dadurch gekennzeichnet, dass** die Durchmesser der Schussdrähte (11, 12) sich vom 1/100 mm-Bereich bis in den 1/10 mm-Bereich erstrecken.

4. Drahtgewebe nach einem oder mehreren der vorhergehenden Ansprüche 1 bis 3, **dadurch gekennzeichnet, dass** die Einschnürung der Schussdrähte (12) im Bereich von 10 % des ursprünglichen Durchmessers liegen.

5. Drahtgewebe nach einem oder mehreren der vorhergehenden Ansprüche 1 bis 4, **dadurch gekennzeichnet, dass** das Drahtgewebe ein Filtertressengewebe ist, so dass die Durchmesser der Kettdrähte (11) größer sind als die Durchmesser der Schussdrähte (12).

6. Drahtgewebe nach einem oder mehreren der vorhergehenden Ansprüche 1 bis 5, **dadurch gekennzeichnet, dass** die Kettdrähte (11) und die Schussdrähte (12) in den Kreuzungsbereichen durch eine thermische Behandlung, vorzugsweise durch ein Sinterverfahren miteinander verbunden sind.

## Claims

1. Woven wire cloth, in particular woven filter cloth, which consists of metallic warp and metallic weft wires (11, 12) secured in a type of weave, **characterized in that** the diameters of the weft wires (12) are equal to or greater than the clear distances between two warp wires arranged next to one another in each case, and **in that** the weft wires (12) are contracted in the crossing regions with the warp wires (11).

2. Woven wire cloth according to Claim 1, **characterized in that** the weft wires (12) are contracted in the crossing regions to the clear distance dimension between the warp wires (11) or approximately to the clear distance dimensions between the warp wires (11).

3. Woven wire cloth according to Claim 1 or 2, **characterized in that** the diameters of the weft wires (11, 12) extend from the 1/100 mm range into the 1/10 mm range.

4. Woven wire cloth according to one or more of the preceding claims 1 to 3, **characterized in that** the contraction of the weft wires (12) lies in the range of 10% of the original diameter.

5. Woven wire cloth according to one or more of the preceding Claims 1 to 4, **characterized in that** the woven wire cloth is a woven filter braid cloth, so that the diameters of the warp wires (11) are greater than the diameters of the weft wires (12).

6. Woven wire cloth according to one or more of the preceding Claims 1 to 5, **characterized in that** the warp wires (11) and the weft wires (12) are connected to one another in the crossing regions by means of thermal treatment, preferably by means of a sintering method.

## Revendications

1. Tissu de fils, en particulier tissu filtrant, qui est constitué de fils métalliques de chaîne et de fils métalliques de trame (11, 12) fixés dans un type de liaison, **caractérisé en ce que** les diamètres des fils de trame (12) sont supérieurs ou égaux aux distances libres entre deux fils de chaîne juxtaposés, et **en ce que** les fils de trame (12) sont comprimés dans les zones de croisement avec les fils de chaîne (11).

2. Tissu de fils selon la revendication 1, **caractérisé en ce que** les fils de trame (12) sont comprimés dans les zones de croisement jusqu'à l'écartement libre des fils de chaîne (11) ou approximativement jusqu'aux écartements libres des fils de chaîne (11).

3. Tissu de fils selon la revendication 1 ou 2, **caractérisé en ce que** les diamètres des fils de trame (11, 12) sont compris entre de l'ordre du 1/1000^{e} de mm et de l'ordre du 1/10^{e} de mm.

4. Tissu de fils selon une ou plusieurs des revendications précédentes 1 à 3, **caractérisé en ce que** la compression des fils de trame (12) représente de l'ordre de 10 % du diamètre d'origine.

5. Tissu de fils selon une ou plusieurs des revendications précédentes 1 à 4, **caractérisé en ce que** le tissu de fils est un tissu de voile filtrant, de sorte que les diamètres des fils de chaîne (11) sont supérieurs aux diamètres des fils de trame (12).

6. Tissu de fils selon une ou plusieurs des revendications précédentes 1 à 5, **caractérisé en ce que** les fils de chaîne (11) et les fils de trame (12) sont reliés entre eux dans les zones de croisement par un traitement thermique, de préférence par un procédé de frittage.
